# EUROPÄISCHE PATENTSCHRIFT

(11) **EP 0 931 970 B1**
(45) Veröffentlichungstag und Bekanntmachung des Hinweises auf die Patenterteilung: **23.05.2001**
(21) Anmeldenummer: 98121739.1
(22) Anmeldetag: 14.11.1998
(51) Int. Cl.: F16L 41/06, F16L 47/00

(54) **Anbohrarmatur mit Absperrfunktion für ein unter Mediendruck stehendes Hauptrohr**
Tapping and cut-off apparatus for pipes under pressure
Appareil de perçage et d'arrêt pour tuyaux à fluide sous pression

(30) Priorität: 27.01.1998 DE 19802884
(43) Veröffentlichungstag der Anmeldung: 28.07.1999
(73) Patentinhaber: MANIBS Spezialarmaturen GmbH & Co. KG, D-42859 Remscheid (DE)
(72) Erfinder: Hintzen, Werner Dipl.-Ing., 50765 Köln (DE)
(74) Vertreter: Mentzel, Norbert, Dipl.-Phys.

(56) Entgegenhaltungen:
- EP-A- 0 361 344
- DE-A- 2 515 235
- DE-A- 19 512 591
- US-A- 5 065 780
- US-A- 5 676 171
- Montage- und Benutzungsanleitung für Frialen-Anbohrgerät, Firma Friatec, III-95

## Beschreibung

Die Erfindung richtet sich auf eine Anbohrarmatur der im Oberbegriff von Anspruch 1 angegebenen Art. Die Absperrfunktion wird durch Drehverstellung eines Kugelglieds hervorgerufen, das im Gehäuse der Armatur eingeordnet ist. Das Anbohren erfolgt durch das Kugelglied. Dazu wird das Bohrwerkzeug durch einen diametralen Durchbruch im Kugelglied hindurchgeführt. Das Bohrwerkzeug umfasst eine Schneidbüchse mit einer Schneide zum Bohren und einen demgegenüber radial abgesetzten Schaft zum Antrieb. Nach dem Anbohren wird an das Gehäuse der Armatur unmittelbar ein Anschlussrohr angebracht. In Abhängigkeit von der Drehlage des Kugelgliedes wird ein Medienfluss vom angebohrten Hauptrohr in das Anschlussrohr entweder durchgelassen oder abgesperrt.

Bei der bekannten Anbohrarmatur dieser Art (Montage- und Benutzungsanleitung für Frialen-Anbohrgerät der Firma Friatec AG) ist eine Druckdichtung auf dem Schaft des Bohrwerkzeugs beweglich angebracht und zwischen einer radial abgesetzten Schneidbüchse einerseits und einer darauf verschraubbaren Kappe, als Bohrgestell dienend, andererseits gefangen. Bei der bekannten Armatur bildet die Druckdichtung eine Baueinheit mit dem Bohrwerkzeug. Zum Anbohren eines medienführenden Hauptrohres muss die Druckdichtung dieser Baueinheit in der Bohröffnung montiert werden, dabei sitzt die Druckdichtung nach der Montage am äußeren Gehäuseende der Armatur und dichtet den Schaft des Bohrwerkzeugs zum Gehäuse hin ab. Der gesamte Montagevorgang ist sehr unhandlich, da die Ringdichtung bei jedem einzelnen Bohrvorgang im Gehäuse präzise positioniert werden muss und das Bohrwerkzeug mit seinem Gestell dem im Wege stehen.

Als weiterer Nachteil dieser bekannten Armatur ist die Bohrerführung am Schaft zu nennen, die nur durch die in maximaler Entfernung zur Anbohrstelle des Hauptrohres angeordnete Druckdichtung erfolgt. Dieser bekannte Aufbau kann beim Anbohren zum Verlaufen der Bohrschneide führen. Nach dem Anbohrvorgang muss die Druckdichtung mit dem Bohrwerkzeug und dem kappenartigen Bohrgestell entfernt werden. Aufgrund der Tatsache, dass die Entfernung zwischen Druckdichtung und Kugelglied ebenfalls maximal ist, füllt das aus dem angebohrten Hauptrohr eingeströmte Medium das gesamte Innenvolumen der Armatur aus. Erschwerend kommt der konstruktionsbedingte große Freiraum hinzu, der sich aus dem stark unterschiedlichen Außendurchmesser des Bohrerschaftes zum Innendurchmesser des Anbohrstutzens ergibt. Dadurch werden nach dem Schließen des Kugelgliedes beachtliche Mengen des Mediums freigesetzt. Handelt es sich bei dem Medium um ein brennbares Gas, so ergibt sich eine Explosionsgefahr.

Es ist bekannt, eine Anbohrarmatur zugleich zum Absperren des unter Mediendruck stehendes Hauptrohres zu verwenden, indem man das Anbohrwerkzeug nach dem Anbohrvorgang durch ein Absperrwerkzeug ersetzt (US 5 676 171 A). Ein Anschlussrohr am Gehäuse des Kugelglieds zum Abzweigen des Mediums aus dem angebohrten Hauptrohr ist nicht vorgesehen. Dichtungsmittel befinden sich am äußeren Ende einer quer auf das Ventilgehäuse aufsetzbaren Haube, die das Bohrgestell für eine Zahnstangenführung einer Bohrmaschine ist.

Bei einer Anbohrarmatur (DE 25 15 235 A) befindet sich ein Dichtungsmittel am äußeren Ende des Bohrgestells, das mit einem verdickten Schaft des Bohrwerkzeugs zusammenwirkt. Dieser Schaft trägt keine Schneidbüchse, sondern einen Spiralbohrer, der das gesamte Material zerspant. Die Späne können sich in das Ventil setzen.

Bei einer nicht zur Absperrung geeigneten Anbohrarmatur (DE 195 12 592 A) wird das Gehäuseinnere der Armatur mit einem Innengewinde versehen, in welchem das hier als Schneidbüchse ausgebildete Bohrwerkzeug verschraubbar ist. Unterhalb dieses Innengewindes wird eine Stützbuchse angeordnet, die eine seitliche Bohrung für den Austritt des Mediums in ein seitliches Abzweigrohr besitzt. In der Stützbuchse sind beidseitig der seitlichen Bohrung zwei Dichtringe vorgesehen, die mit der Umfangsfläche der Schneidbüchse zusammenwirken.

Der Erfindung liegt die Aufgabe zugrunde, eine einfache, preiswerte Armatur der im Oberbegriff des Anspruches 1 genannten Art zu entwickeln, die sich einfacher und zuverlässiger handhaben lässt. Dies wird erfindungsgemäß durch die im Kennzeichen des Anspruches 1 angeführten Maßnahmen erreicht, denen folgende besondere Bedeutung zukommt.

Bei der Erfindung ist das mit dem Bohrwerkzeug zusammenwirkende Gegendichtungsmittel eine elastomere Ringdichtung, die in kurzer Entfernung vor dem Kugelglied in einem Einbauteil des Gehäuses angeordnet ist und deshalb nachfolgend "Vorschalt-Ringdichtung" genannt werden soll. Die Vorschalt-Ringdichtung bildet eine feste Baueinheit mit der Armatur. Beim Einstecken des Bohrwerkzeuges in das Armaturengehäuse braucht sich die Bedienungsperson mit der Vorschalt-Ringdichtung nicht zu befassen; die Bedienungsperson braucht nicht einmal über die Existenz dieser Dichtung informiert zu sein. Das Bohrwerkzeug benötigt, ausgehend vom Schneidwerkzeug nur einen Zylinderabschnitt mit gleichförmiger, durchgehender Umfangsfläche vor dem radial abgesetzten Schaft. Beim Einstecken des Bohrwerkzeuges in das Armaturengehäuse wirkt der Zylinderabschnitt wie ein Kolben, der mit seiner Umfangsfläche die Vorschalt-Ringdichtung verschließt. Dieser werkzeugseitige Zylinderabschnitt ist also das Gegendichtungsmittel für die als Dichtmittel fungierende armaturseitige Vorschalt-Ringdichtung. Da die Ringdichtung in kurzer Entfernung vor dem Kugelglied sitzt, kann das Bohrwerkzeug sehr leicht und präzise ohne zu verkanten durch die Vorschalt-Ringdichtung geführt werden. Außerdem ist bei der Montage des Bohrwerkzeuges in der Baugruppe ein Verschmutzen der im Gehäuse herstellerseitig fest integrierten Vorschalt-Ringdichtung an dieser Stelle ausgeschlossen.

Der Zylinderabschnitt des Bohrwerkzeuges hat eine ausreichende Abschnittlänge, so dass die mediendichte Verbindung mit der Ringdichtung nicht nur in der maximalen axialen Ausfahrstellung des Bohrwerkzeugs beim Anbohrvorgang vorliegt, sondern auch im Endpunkt der Rückzugsstellung des Bohrwerkzeugs, wo dessen Schneide bereits gerade aus dem diametralen Durchbruch im Kugelglied herausgezogen worden ist. In dieser Rückzugsstellung kann das Kugelglied davon ungestört in eine Schließlage gegenüber dem Bohrloch im Hauptrohr überführt werden, wonach dann das Bohrwerkzeug ganz entfernt werden kann. Durch die besondere Lage der Vorschalt-Ringdichtung- kurz vor dem Kugelglied - kann nun ein minimales Volumen des aus dem Hauptrohr strömenden Mediums in das Gehäuse der Armatur gelangen. Dieser Vorteil wird durch den massiven Zylinderteil, der nach der eingelassenen Schneidbüchse beginnt, verstärkt und das Volumen für das einströmende Medium deutlich reduziert. Dadurch wird bei einem brennbaren Medium die Explosionsgefahr auf einem absoluten Minimum gehalten.

Weitere Maßnahmen und Vorteile der Erfindung ergeben sich aus den Unteransprüchen, der nachfolgenden Beschreibung und den Zeichnungen. In den Zeichnungen ist die Erfindung zwar nur in einem Ausführungsbeispiel dargestellt, aber in mehreren Arbeitsschritten bei ihrem bestimmungsgemäßen Gebrauch. Es zeigen:
- Fig. 1: einen Längsschnitt durch die erfindungsgemäße Armatur nach deren Befestigung an einem anzubohrenden Hauptrohr,
- Fig. 2,: in gleicher Darstellung, den nächsten Arbeitsschritt, wo ein mit einem Bohrwerkzeug vorgesehenes Bohrgestell am Gehäuse der Armatur befestigt ist,
- Fig. 3: einen nachfolgenden Arbeitsschritt, wo eine Druckprobe zur Ermittlung der Dichtigkeit der Befestigung der Armatur am Hauptrohr vorgenommen wird,
- Fig. 4: das Ende der Bohrphase der Armatur, nämlich nachdem das Bohrwerkzeug in das Hauptrohr ein Loch geschnitten hat,
- Fig. 5: den danach folgenden Verfahrensschritt, wo das Bohrwerkzeug in seine volle Rückzugsstellung gebracht worden ist und das Kugelglied im Gehäuse der Armatur sich in Schließlage befindet,
- Fig. 6: den nachfolgenden Arbeitsschritt, wo das mit dem Bohrwerkzeug ausgerüstete Bohrgestell von der Armatur demontiert worden ist und für eine weitere Anwendung an einer anderen Armatur bereit gemacht wird, und
- Fig. 7: die Armatur mit einem daran angebrachten Anschlußrohr in Offenlage des Kugelglieds, wo das Medium aus dem angebohrten Hauptrohr abgezweigt wird.

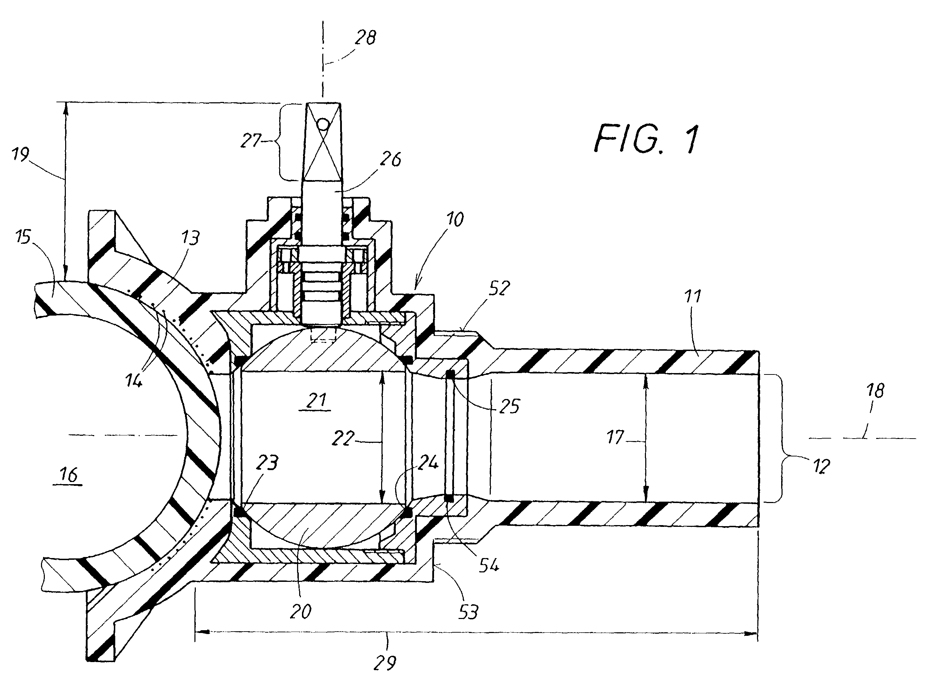

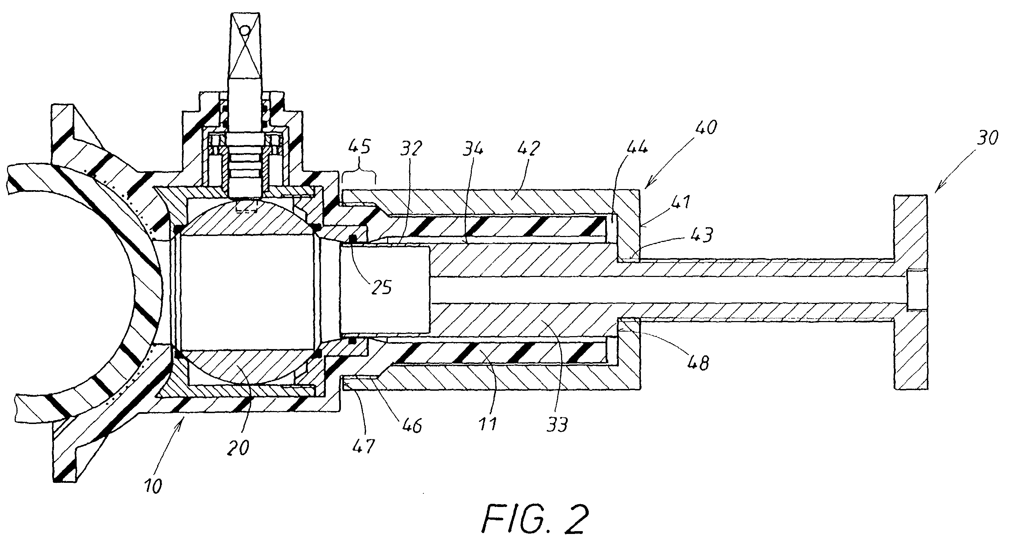

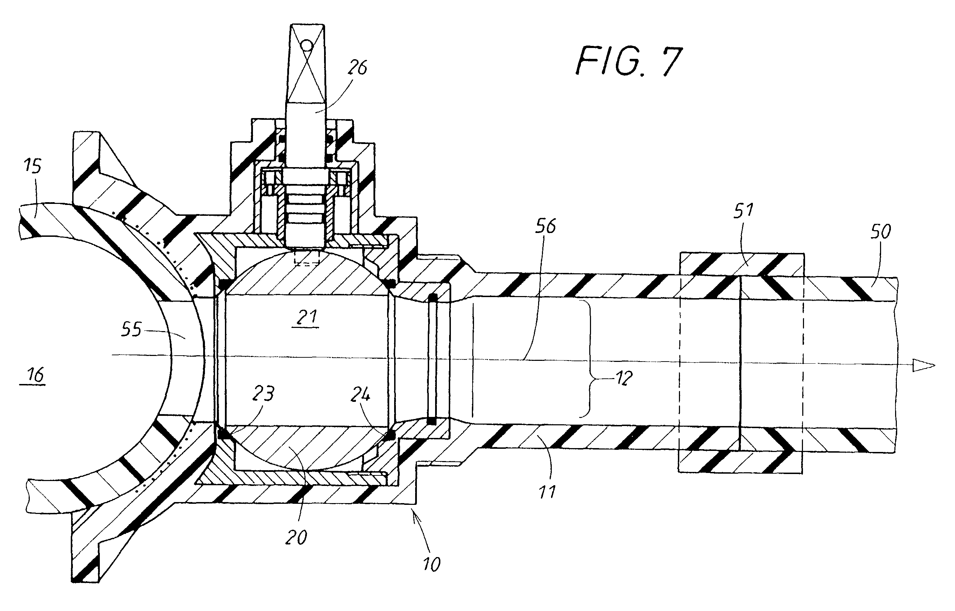

Die erfindungsgemäße Armatur umfaßt ein Gehäuse 10, das in seinem äußeren Wandbereich vorzugsweise aus Kunststoff ausgebildet ist und nur einen einzigen Rohrstutzen 11 aufweist. Die Öffnung 12 des Stutzens hat zwei Funktionen zu erfüllen, deren eine aus den Fig. 2 bis 5 und deren andere aus Fig. 7 zu ersehen sind. Das Gehäuse ist mit einem ebenfalls aus Kunststoff ausgebildeten Sattel 13 versehen, der zur Befestigung der Armatur an einem Hauptrohr 15 dient, dessen Rohrinneres unter einem in Fig. 1 mit 16 gekennzeichneten Mediendruck steht. Das Hauptrohr 15 besteht ebenfalls aus thermoplastischem Kunststoff. Als Medium kommt z. B. Wasser oder ggf. brennbares Gas infrage. Die Befestigung des Sattels 13 erfolgt einerseits durch nicht näher gezeigte mechanische Befestigungsmittel, wie eine das Hauptrohr 15 umschließende Gegenschellen-Hälfte, und zwischen dem Sattel und der Gegenschellen-Hälfte wirkende Spannschrauben und Muttern, aber andererseits auch durch Schmelzverbindungen zwischen dem Kunststoffmaterial des Sattels 13 und dem Hauptrohr 15. Dafür umfaßt der Sattel an der Berührungsfläche elektrische Heizleiter 14.

Im Inneren des Kunststoffgehäuses 10 befinden sich mehrere durch eine gleichförmige Linien-Schraffur in Fig. 1 hervorgehobene metallische Einlagen. Sie erzeugen einen Innenraum für ein Kugelglied 20, welches nur einen einzigen diametralen Durchbruch 21 besitzt. Der kreisförmige Öffnungsquerschnitt 22 des Durchbruchs 21 ist größer / gleich dem lichten Querschnitt 17 des Stutzens 11 und der Durchbruch 21 ist mit der strichpunktiert in Fig. 1 verdeutlichten Stutzenachse 18 axial ausgerichtet. Im Gehäuseinneren befinden sich zwei Ringdichtungen 23, 24, die mit dem Kugelglied 20 mediendicht zusammenwirken und daher, zur Unterscheidung von einer weiteren, noch näher zu beschreibenden Ringdichtung 25 im Gehäuse als "Kugeldichtung" bezeichnet werden sollen.

Das Kugelglied 20 ist über einen aus dem Gehäuse 10 herausragenden, dort mediendicht drehgelagerten Zapfen 26 zwischen zwei Drehlagen verstellbar. Die eine Drehlage ergibt sich aus Fig. 1, wo der Durchbruch 21, wie bereits gesagt wurde, mit der Stutzenachse 18 ausgerichtet ist. Diese Drehlage ist auch aus Fig. 7 zu erkennen, wo der Endzustand der Armatur gezeigt ist. In diesem Fall ist, ausweislich Fig. 7, ein Bohrloch 55 in das Hauptrohr 15 geschnitten und ein Anschlußrohr 50 über eine Muffe 51 od. dgl. am Stutzen 11 angebracht. Daher kommt es in dieser Drehlage 20 des Kugelglieds zu dem aus Fig. 7 ersichtlichen Medienfluß 56 zwischen dem Hauptrohr 15 und dem Anschlußrohr 50. Diese Drehlage 20 des Kugelglieds erweist sich somit als "Offenlage". Die beiden Kugeldichtungen 23, 24 umgrenzen die beidseitigen Öffnungen des diametralen Durchbruchs 21 und sollen einen unerwünschten Medienfluß zur Lagerstelle des Drehzapfens 26 verhindern.

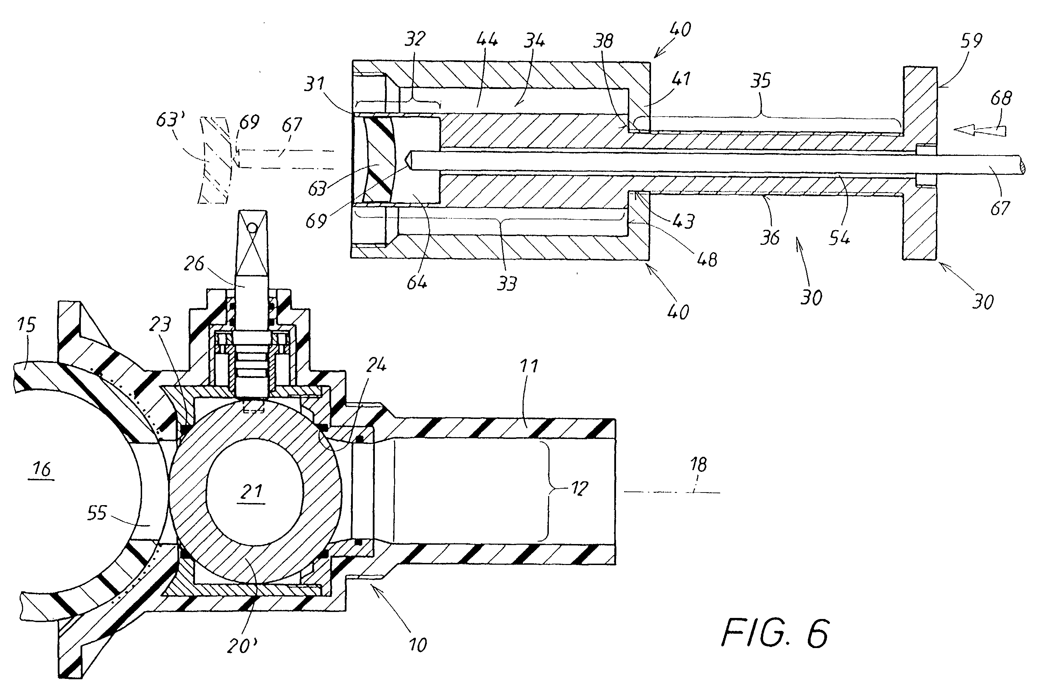

Über den Drehzapfen 26 kann aber das Kugelglied durch eine Vierteldrehung in eine zweite, aus Fig. 6 ersichtliche Drehlage 20' gebracht werden, wo der Diametralverlauf des Durchbruchs 21 senkrecht zur Stutzenachse 18 verläuft. Es liegen geschlossene Wandteile des Kugelglieds 20' sowohl gegenüber dem Bohrloch 55 als auch gegenüber der Stutzenöffnung 12 vor, weshalb über die Kugeldichtungen 23, 24 das im Hauptrohr 15 befindliche Medium 16 abgesperrt ist. Ein Medienfluß zum Rohrstutzen 11 des Gehäuses 10 erfolgt nicht. Damit erweist sich die aus Fig. 6 ersichtliche Drehlage 20' des Kugelglieds als "Schließlage" der Armatur.

Die Verstellung des Kugelglieds zwischen der Offenlage 20 von Fig. 1 bzw. 7 und der Schließlage 20' von Fig. 6 erfolgt, wie bereits erwähnt wurde, durch Drehung des drehfest damit verbundenen Zapfens 26. Die in Fig. 1 mit 28 gekennzeichnete Zapfenachse liegt stets senkrecht zur durch die Stützenachse 18 bestimmten Längsrichtung des Gehäuses 10. Die Fig. 1 zeigt die tatsächliche Position der am Hauptrohr 15 befestigten Armatur.Die Stutzenachse 18 verläuft im wesentlichen horizontal, während die Drehachse 28 zur Betätigung des Kugelglieds 20 in der Armatur im wesentlichen vertikal orientiert ist.

Weil das Hauptrohr 15 mit der Armatur im Erdreich versenkt angeordnet ist, läßt sich das aus dem Gehäuse 10 herausragende Betätigungsende 27 des Drehzapfens 26 bequem, von der Oberfläche des Erdreichs aus, über eine Schlüsselstange kuppeln. Durch die Schlüsselstange wird das Kugelglied zwischen seinen beiden Drehlagen wahlweise verstellt. Die beiden Drehlagen sind durch Endanschläge im Lagerbereich des Drehzapfens 26 begrenzt. Beachtlich ist, daß in dieser vertikalen Richtung die Armatur eine äußerst kleine Bauhöhe 19 aufweist, die es erlaubt, mit einer geringen Bodenabdeckung auszukommen. Es spielt wegen der horizontalen Lage des Stutzens 11 für die Bodenabdeckung überhaupt keine Rolle, daß in dieser Richtung die Armatur, wie Fig. 1 zeigt, eine wesentlich größere Baulänge 29 in horizontaler Richtung gegenüber dem Hauptrohr 15 besitzt. Dies verringert die Kosten für die Verlegung des Hauptrohres 15 und vereinfacht die Handhabung der Armatur beim Anbohren des Hauptrohres, was in folgender Weise ausgeführt wird.

Der Anbohrvorgang beginnt mit den aus Fig. 2 ersichtlichen Maßnahmen. Der Armatur ist ein sehr einfaches, preiswertes Bohrgerät zugeordnet, das aus zwei Teilen 30, 40 besteht. Dieses Bohrgerät 30, 40 braucht nur einmal angeschafft zu werden und kann nacheinander immer wieder bei Armaturen der erfindungsgemäßen Art verwendet werden. Die beiden Teile des Bohrgeräts sind ein am Gehäuse 10 lösbar zu befestigendes Bohrgestell 40 und ein darin verschraubbares Bohrwerkzeug 30.

Das Bohrgestell 40 hat die Form eines Topfes, bestehend aus einer zweckmäßigerweise zylindrischen Topfwand 42 und einem im wesentlichen ebenen Topfboden 41. Der Topfboden 41 besitzt einen mit der Achse des Zylinderverlaufs ausgerichteten Durchbruch, der mit einem Innengewinde 43 versehen ist. Im Befestigungsfall befindet sich, wie Fig. 2 zeigt, der Rohrstutzen 11 vom Gehäuse 10 im Topfinneren 44. Die Befestigung erfolgt über den Topfrand 45. Zweckmäßigerweise erfolgt diese Befestigung durch eine Verschraubung. Dazu besitzt der Topfrand 45 ein aus Fig. 2 ersichtliches Topfinnengewinde 46, das im Befestigungsfall mit einem aus Fig. 1 erkennbaren Gehäuseaußengewinde 52 in Eingriff steht. Das Gehäuseaußengewinde 52 befindet sich vor einem aus Fig. 1 erkennbaren Gehäuseabsatz 53, der bedarfsweise als Anschlag mit der aus Fig. 2 erkennbaren Topfstirnfläche 47 zusammenwirken kann. Dadurch kann die Aufschraublage des Bohrgestells 40 gesichert werden. Es können dafür aber auch andere Sicherungsmittel zwischen dem Gehäuse 10 und der Topfwand 42 eingesetzt werden.

Das Bohrwerkzeug 30 ist aus sehr wenigen Bauteilen zu einer Baueinheit zusammengefügt und läßt die folgende, am besten aus Fig. 6 oben entnehmbare Gliederung erkennen. Man strebt an, das Bohrwerkzeug 30 möglichst einstückig auszubilden.

An seinem einen Ende besitzt das Bohrwerkzeug 30 zunächst eine Schneide 31, die Bestandteil einer hohlzylindrischen Schneidbüchse 32 ist. Die Schneidbüchse 32 ist einstückiger Bestandteil eines Zylinderabschnitts 33, der im vorliegenden Fall die Schneidbüchse 32 axial fortsetzt und daher, mit ihr, eine durchgehende, gleichförmige zylindrische Umfangsfläche 34 bestimmt. Die Schneidbüchse 32 ist daher der vordere Teil des Zylinderabschnitts 33.

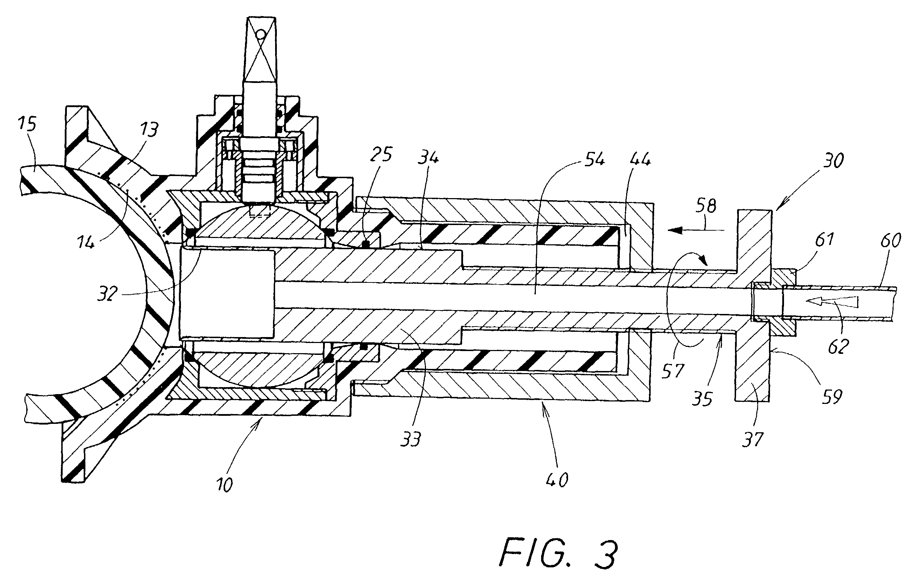

Das Bohrwerkzeug 30 besitzt, im Anschluß an den Zylinderabschnitt 33, einen demgegenüber radial abgesetzten Schaft 35, der ein Außengewinde 36 trägt. Dieses Außengewinde 36 ist mit dem bereits vorbeschriebenen Innengewinde 43 im Topfboden 41 des Bohrgestells 40 in Eingriff. Dieser Gewindeingriff 43, 36 bewirkt einen aufeinander abgestimmten Dreh- und Axialantrieb des Bohrwerkzeugs 30, was in Fig. 3 einerseits durch einen Drehpfeil 57 und andererseits durch einen Axialpfeil 58 veranschaulicht ist. Der Gewindeingriff 43, 36 bestimmt also den Bohrvorschub.

Die Fig. 6, oben, zeigt, in Übereinstimmung mit Fig. 2, die eine Endstellung beim Verschrauben des Bohrwerkzeugs 30 im Gestell 40, nämlich die volle, bohrunwirksame "Rückzugsstellung". Diese Endstellung wird zweckmäßigerweise durch ein Endanschlag-Paar zwischen dem Bohrgestell 40 einerseits und dem Bohrwerkzeug 30 andererseits bestimmt. Der Topfboden 41 erzeugt den einen Anschlagteil. Eine am Bohrwerkzeug 30 vorgesehene Schulter 38 kommt an der Bodeninnenfläche 48 zur Anlage, wie aus Fig. 6 zu erkennen ist. Die Schulter 38 entsteht durch den erwähnten radialen Übergang zwischen dem Zylinderabschnitt 33 und dem Gewindeschaft 35. In dieser Rückzugsstellung kann der ganze Zylinderabschnitt 33, bis zur Schneide 31, im Topfinneren 44 verschwinden.

In der Befestigungslage des Bohrgestells 40 von Fig. 2 greift einerseits der Rohrstutzen 11 ins Topfinnere 44 und andererseits der Zylinderabschnitt 33 des Bohrwerkzeugs 30 ins Innere des Rohrstutzens 11 vom Gehäuse 10 der Armatur ein. Das Bohrwerkzeug 30 ragt mit der Umfangsfläche 34 seines bereits erwähnten vorderen Teils 32 in die ebenfalls bereits genannte besondere Ringdichtung 25 ein. Diese Ringdichtung 25 befindet sich im Gehäuseinneren zwischen dem Kugelglied 20 und der aus Fig. 1 erkennbaren Stutzenöffnung 12. Diese Ringdichtung 25 ist also in kurzer Entfernung vor der bereits beschriebenen Kugeldichtung 24 dem Kugelglied 20 vorgeschaltet und soll daher nachfolgend "Vorschalt-Ringdichtung" genannt werden. Diese Vorschalt-Ringdichtung 25 sitzt in einer inneren Ringnut in dem bereits erwähnten einen metallischen Einbauteil des Gehäuses 10, welches zweckmäßigerweise auch die entsprechende Aufnahme für die benachbarte Kugeldichtung 24 aufweist. Bei dem aus Fig. 2 erkennbaren Befestigungsfall wirkt die Vorschalt-Ringdichtung 25 mediendicht mit der zylindrischen Umfangsfläche 34 vom Zylinderabschnitt 33 des Bohrwerkzeugs 30 zusammen. Diese Dichtwirkung bleibt erhalten, wenn man das Bohrwerkzeug, wie Fig. 3 veranschaulicht, im Sinne der erwähnten Pfeile 57, 58 weiter einschraubt. Das kann maschinell oder manuell erfolgen. Dazu kann man ein am äußeren Ende des Schafts 35 sitzendes, ggf. kopfartig verbreitertes Schaft-Endstück 37 nutzen, an dem man das Drehwerkzeug ansetzt.

Wie in der Einschraublage von Fig. 3 näher gezeigt ist, ist das erfindungsgemäße Bohrwerkzeug 30 zugleich Bestandteil einer "Druckprüfeinrichtung". Eine solche Druckprüfung könnte bereits in der vollen Rückzugstellung von Fig. 2 ausgeführt werden. Dazu besitzt das Bohrwerkzeug 30 einen durchgehenden Kanal 54, der das Bohrwerkzeug 30, ausgehend vom Außenende 59 des Endstücks 37, bis zum offenen Ende der Schneidbüchse 32 vorzugsweise axial durchsetzt. Ans Außenende 59 des Bohrwerkzeugs 30 wird über ein geeignetes Anschlußstück 61 vorübergehend eine Druckleitung 60 angeschlossen, die mit einer Druckluftquelle od. dgl. in Verbindung steht. Dadurch kann ein durch den Pfeil in Fig. 3 verdeutlichter Prüfdruck 62 im Sattelbereich 13 des Armaturgehäuses 10 ausgeübt werden. Es liegt, wie bereits erwähnt wurde, auch in diesem Fall eine mediendichte Verbindung zwischen der Umfangsfläche 34 des Zylinderabschnitts 33 des Bohrwerkzeugs und der Vorschalt-Ringdichtung 25 vor. Der Prüfdruck kann daher nicht ins Topfinnere 44 entweichen. Der Prüfdruck 52 wirkt auf die Berührungsflächen zwischen dem Gehäusesattel 13 und dem Rohrumfang des Hauptrohres 15. Es erfolgt also eine Dichtigkeitsprüfung, die auch eine Auskunft gibt über die künftige Mediendichtigkeit und die über den bereits erwähnten elektrischen Heizleiter 14 erzeugte Schweißverbindung zwischen dem Gehäusesattel 13 und dem Hauptrohr 15. Diese Druckprüfung kann also sehr einfach, vor dem Anbohren des Hauptrohres 15, über das Bohrwerkzeug 30 erfolgen.

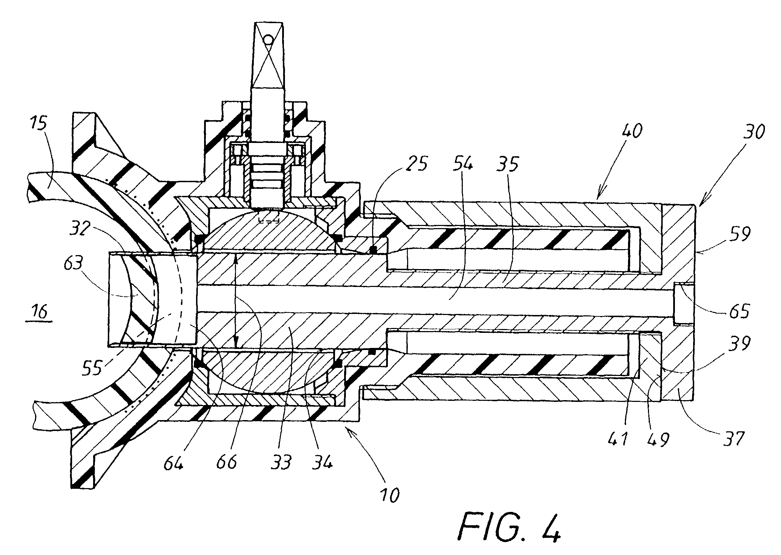

Dann erfolgt durch weitere Verschraubung im Sinne der Pfeile 57, 58 des Bohrwerkzeugs 30 im Bohrgestell 40 der Anbohrvorgang, dessen Endzustand aus Fig. 4 zu erkennen ist. In Fig. 4 ist die volle "Ausfahrstellung" des Bohrwerkzeugs 30 gegenüber dem Bohrgestell 40 gezeigt. Diese Ausfahrstellung ist ebenfalls durch ein weiteres Endanschlag-Paar 39, 49 zwischen den beiden Teilen 30, 40 festgelegt. Der eine Anschlagteil ist auch im vorliegenden Fall der Topfboden 41 vom Bohrgestell 40, dessen Bodenaußenfläche 49, wie Fig. 4 zeigt, an einem Radialabsatz 39 zwischen dem Gewindeschaft 35 und dem kopfartigen Endstück 37 zur Anlage kommt. In dieser vollen Ausfahrstellung von Fig. 4 hat die Schneidbüchse 32 das Bohrloch 55 in das Hauptrohr 15 eingeschnitten, wobei ein Bohrkern 63 praktisch mediendicht im Büchseninneren 64 sitzt. Dadurch kann das im Hauptrohr 15 befindliche Medium 16 bereits gegenüber dem durchgehenden Kanal 54 im Werkzeug 30 abgedichtet sein. Um sicherzugehen, könnte man aber auch ohne weiteres eine Gewindeaufnahme 65 am Werkzeug-Außenende 59 für einen Dichtungsstopfen nutzen. Diese Gewindeaufnahme 65 diente bereits zum druckfesten Ankuppeln des in Fig. 3 gezeigten und bereits beschriebenen Anschlußstücks 61 für die Druckleitung 60.

Entscheidend ist aber, daß zwischen der Vorschalt-Ringdichtung 25 im Gehäuse 10 und der Umfangsfläche 34 vom Zylinderabschnitt 33 des Bohrwerkzeugs 30 auch in dieser Ausfahrstellung von Fig. 4 ein mediendichter Abschluß vorliegt. Das Medium 16 im Hauptrohr 15 kann nicht zwischen dem Bohrwerkzeug 30 und dem Bohrgestell 40 entweichen. Der im Zusammenhang mit Fig. 1 beschriebene Öffnungsquerschnitt 22 im Durchbruch 21 des Kugelglieds 20 kann größer / gleich dem aus Fig. 4 erkennbaren Zylinderdurchmesser 66 vom Zylinderabschnitt 33 gestaltet sein. Die Innenwand des Durchbruchs 21 kann beim vorerwähnten Verschrauben mehr oder weniger führungswirksam mit der Umfangsfläche 34 vom Zylinderabschnitt 33 zusammenwirken und daher unmittelbar vor dem Bohrbeginn des Bohrlochs 55 für eine einwandfreie Zentrierung des Bohrwerkzeugs 30 sorgen. Das Bohrwerkzeug 30 ist stets mit der aus Fig. 1 erkennbaren und bereits mehrfach erwähnten Stutzenachse 18 ausgerichtet.

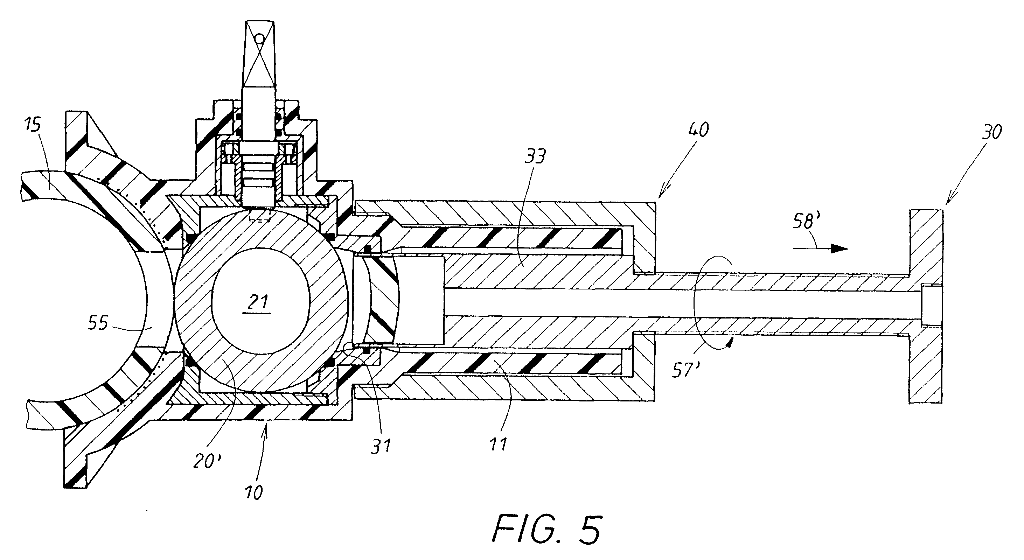

Nach dem Anbohren gemäß Fig. 4 wird das Bohrwerkzeug 30 im Sinne des aus Fig. 5 ersichtlichen Gegen-Drehpfeils 57' und Gegen-Axialpfeils 58' aus dem Bohrgestell 40 herausgeschraubt. In Fig. 5 ist wieder die bereits im Zusammenhang mit Fig. 6 beschriebene Anschlagposition bei voller Rückzugsstellung des Bohrwerkzeugs 30 gegenüber dem Bohrgestell 40 dargestellt. Wie ersichtlich, befindet sich der Zylinderabschnitt 33 des Bohrwerkzeugs 30 mit der vorausgehend wirksamen Schneide 31 vor dem Kugelglied im Gehäuse 10, weshalb dieses in der aus Fig. 5 ersichtlichen, bereits beschriebenen Schließlage 20' verdreht werden kann. Das Kugelglied dichtet jetzt das Bohrloch 55 im Hauptrohr 15 gegenüber dem Rohrstutzen 11 am Gehäuse 10 ab. Es ist jetzt ohne weiteres eine Demontage des zweiteiligen Bohrgerätes 30, 40 möglich.

Diese Demontage ist gemäß Fig. 6 vollzogen. Wegen der bereits beschriebenen Schließlage 20' des Kugelglieds gibt es keinen Medienfluß im Rohrstutzen 11. Es kann jetzt an den Rohrstutzen 11, wie bereits im Zusammenhang mit Fig. 7 beschrieben wurde, ein Anschlußrohr 50 angebracht werden. Dann kann durch Drehbetätigung über den Zapfen 26 das Kugelglied wieder in seine aus Fig. 7 ersichtliche Offenlage 20 überführt werden, die den bereits erwähnten Medienfluß 56 aus dem angebohrten Hauptrohr 15 zum Anschlußrohr 50 zuläßt. Die Stutzenöffnung 12 ist also bei der erfindungsgemäßen Armatur nicht nur die beschriebene Bohröffnung zum Einführen des Bohrwerkzeugs gemäß Fig. 4, sondern auch eine Anschlußöffnung für ein Anschlußrohr 50 gemäß Fig. 7. Das bringt einen sehr einfachen Aufbau des Kugelglieds 20 mit nur zwei Kugeldichtungen 23, 24 und nur einem einzigen Stutzen 11 am Gehäuse 10.

In Fig. 6, oben, ist, wie bereits erwähnt wurde, die demontierte Lage des zweiteiligen Bohrgerätes 30, 40 gezeigt. Dabei befindet sich, wegen des vorausgehenden Anbohrvorgangs, der Bohrkern 63 zunächst noch im Büchseninneren 64. Die Entfernung des Bohrkerns 63 ist aber in folgender einfacher Weise ohne weiteres möglich, weil dem Kanal 54 des Bohrwerkzeugs noch eine weitere Funktion zukommt.

Gemäß Fig. 6 wird der axiale Kanal 54 im Bohrwerkzeug 30 zum Durchführen einer Auswerfstange 67 genutzt. Diese wird vom Außenende 59 des Bohrwerkzeugs in den Kanal im Sinne des Bewegungspfeils 68 von Fig. 6 eingeführt. Mit dem Stangenende 69 wird, wie strichpunktiert veranschaulicht ist, der im Büchseninneren sitzende Bohrkern 63 im Sinne von 63' herausgedrückt. Das Bohrgerät 30, 40 von Fig. 6 ist dann wieder bereit, die Bohrarbeit bei einer weiteren Armatur zu vollziehen. Das Bohrgerät 30, 40 kann also beliebig oft benutzt werden.

### Bezugszeichenliste:

- 10: Gehäuse
- 11: Stutzen, Rohrstutzen
- 12: Stutzenöffnung von 12, Bohr- und Anschlußöffnung von 10
- 13: Sattel an 10
- 14: elektrischer Heizleiter bei 13
- 15: Hauptrohr
- 16: Medium in 15, Mediendruck
- 17: lichter Stutzenquerschnitt von 11
- 18: Stutzen-Längsachse
- 19: vertikale Bauhöhe der Armatur über 15
- 20: Kugelglied (in Offenlage)
- 20': Schließlage von 20
- 21: diametraler Durchbruch in 20
- 22: Öffnungsquerschnitt von 21
- 23: eine Ringdichtung für 20, Kugeldichtung
- 24: andere Ringdichtung für 20, Kugeldichtung
- 25: Vorschalt-Ringdichtung für 30
- 26: Drehzapfen für 20
- 27: herausragendes Betätigungsende von 26
- 28: Zapfenachse, Drehachse von 20
- 29: horizontale Baulänge der Armatur neben 15
- 30: erster Teil des Bohrgerätes, Bohrwerkzeug
- 31: Schneide bei 32 von 30
- 32: Schneidbüchse, vorderer Teil von 33
- 33: Zylinderabschnitt von 30
- 34: zylindrische Umfangsfläche von 33
- 35: Schaft von 30, Gewindeschaft
- 36: Außengewinde von 35
- 37: kopfartiges Endstück von 30
- 38: erster Anschlagteil, Schulter zwischen 33, 35
- 39: zweiter Anschlagteil, Radialabsatz zwischen 35, 37
- 40: zweiter Teil des Bohrgerätes, topfförmiges Bohrgestell
- 41: Topfboden von 40
- 42: zylindrische Topfwand von 40
- 43: Innengewinde in Bohrung von 41
- 44: Topfinneres von 40
- 45: Topfrand von 42
- 46: Topfinnengewinde
- 47: Topfstirnfläche von 42
- 48: anderer Anschlagteil, Bodeninnenfläche von 41
- 49: anderer Anschlagteil, Bodenaußenfläche von 41
- 50: Anschlußrohr für 56
- 51: Muffe zwischen 50, 11
- 52: Gehäuseaußengewinde für 46 von 40
- 53: Gehäuseabsatz bei 52
- 54: axialer Kanal in 30
- 55: Bohrloch in 15
- 56: Medienfluß aus 15 in 50 (Fig. 7)
- 57: Pfeil des Drehantriebs im Ausschraubsinne (Fig. 3)
- 57': Drehpfeil für Rückschrauben von 30 (Fig. 5)
- 58: Pfeil des Axialtriebs im Ausschraubsinne (Fig. 3)
- 58': Axialpfeil für Rückschraubbewegung von 30 (Fig. 5)
- 59: Außenende von 30
- 60: Druckleitung für 62
- 61: Anschlußstück zwischen 60, 54 (Fig. 3)
- 62: Prüfdruck (Fig. 3)
- 63: Bohrkern in 64 von 30 (Fig. 4, 6)
- 63': Herausdrücklage von 63 (Fig. 6)
- 64: Büchseninneres von 32
- 65: Gewindeaufnahme für 61 bei 59 (Fig. 4)
- 66: äußerer Zylinderdurchmesser von 33
- 67: Auswerfstange für 63 (Fig. 6)
- 68: Bewegungspfeil für 67 (Fig. 6)
- 69: Stangenende von 67 (Fig. 6)

## Patentansprüche

1. Anbohr- und Absperrarmatur für ein unter Mediendruck (16) stehendes Hauptrohr (15),
mit einem absperrwirksamen Kugelglied (20) in einem am Rohr (15) befestigten Gehäuse (10),
mit einer Bohröffnung (12) im Gehäuse (10) zum Einführen eines am Hauptrohr (15) wirksamen Bohrwerkzeugs (30), das aus einem drehangetriebenen (57) Schaft (35) mit einer endseitigen zylindrischen Schneidbüchse (32) besteht, deren Konte eine Schneide (31) bildet,
und mit einem Bohrgestell (40), über welches das Bohrwerkzeug (30) am Gehäuse (10) befestigt wird,
wobei nach dem Anbohren an die Bohröffnung (12) ein Anschlussrohr (50) zum Abzweigen (56) des Mediums aus dem angebohrten Hauptrohr (15) anschließbar ist,
und wobei das Kugelglied (20) einerseits einen diametralen Durchbruch (21) hat zum Durchführen des Bohrwerkzeugs (30) und andererseits durch eine Drehung um eine dazu senkrechte Drehachse (28) zwischen zwei Drehlagen umsteuerbar ist, nämlich einer einen Medienfluss (56) aus dem angebohrten Hauptrohr (15) zum Anschlussrohr (50) gestattenden Offenlage und einer den Medienfluss absperrenden Schließlage (20'),
und das Bohrwerkzeug (30) außer seinem Rotationsantrieb (57) auch noch einen axialen Bohrvorschubg (58) erfährt, der es zwischen einer das Kugelglied (20) durchsetzenden bohrwirksamen Ausfahrstellung und einer die Drehung des Kugelgliedes gestattenden Rückzugsstellung verstellt,
**dadurch gekennzeichnet ,**
dass zwischen der Schneidbüchse (32) und dem Schaft (35) ein Zylinderabschnitt (33) angeordnet ist, der eine von der Schneide (31) der Schneidbüchse (32) an durchgehend gleichförmige Umfangsfläche (34) aufweist, dessen in Ausfohrrichtung vorderster Teil die Schneide der Schneidbüchse (32) ist und der beim Anbohren ein bohrwerkzeugseitiges Dichtungsmittel für Mediendichtigkeit ist,
dass in einem Einbauteil des Gehäuses (10) eine Ringdichtung (25) dem Kugelglied (20) in Ausfohrrichtung vorgeschaltet ist und diese Vorschalt-Ringdichtung (25) das zugehörige armaturseitiges Gegendichtungsmittel bildet,
welches im ganzen Verstellbereich zwischen der Ausfahrstellung und Rückzugsstellung des Bohrwerkzeugs (30) mediendicht mit der Umfangsfläche (34) des Zylinderabschnittes (33) zusammenwirkt,
und dass die Vorschalt-Ringdichtung (25) in so kurzer Entfernung vor dem Kugelglied (20) angeordnet ist, dass sie in der Rückzugsstellung des Bohrwerkzeuges (30) an der Schneidbüchse (32) des Zylinderabschnitts (33) angreift.

2. Armatur nach Anspruch 1, dadurch gekennzeichnet, dass das Bohrgestell (40) aus einem Topf besteht, dessen Topfinneres (44) im Befestigungsfall den Rohrstutzen (11) aufnimmt,
dessen Topfrand (45) am Gehäuse (10) befestigt ist und dessen Topfboden (41) das Innengewinde (43) trägt.

3. Armatur nach Anspruch 2, dadurch gekennzeichnet, dass zur Befestigung des Bohrgestells (40) der Topfrand (45) mit dem Gehäuse (10) verschraubt (46, 52) ist.

4. Armatur nach einem der Ansprüche 1 bis 3, dadurch gekennzeichnet, dass das Bohrwerkzeug (30) von einem Kanal (54) axial durchsetzt ist, der sich vom Schaftende (59) bis zur Schneide (31) erstreckt,
und dass das Bohrwerkzeug (30) zugleich Bestandteil einer Druckprüfeinrichtung (60, 61) ist und zur Prüfung, ob die Armatur am Hauptrohr (15) mediendicht befestigt ist, ein Prüfdruck (62) an den Kanal (54) angelegt wird.

5. Armatur nach Anspruch 4, dadurch gekennzeichnet, dass der axiale Kanal (54) im Bohrwerkzeug (30) zugleich zum Durchführen einer Stange (67) dient und
dass mit der Stange (67) der Bohrkern (63) aus dem Inneren (64) der Schneidbüchse (32) ausgeworfen (63', 68) wird.

6. Armatur nach einem der Ansprüche 1 bis 5, dadurch gekennzeichnet, dass die Armatur eine Kombination aus metallischen Baugliedern und aus Kunststoff-Bauteilen ist, wobei die Kunststoff-Bauteile an den Außenflächen des Gehäuses (10) liegen und das Kugelglied (20) sowie dessen Drehbetätigung (26) metallische Bauglieder sind.

## Claims

1. Tapping stop valve for a main pipe (15) under medium pressure (16),
having a shut-off ball element (20) in a housing (10) fastened to the pipe (15),
having a drilling opening (12) in the housing (10) for introducing a drilling tool (30), which acts upon the main pipe (15) and comprises a rotatable (57) shank (35) having at one end a cylindrical piercing bush (32), the edge of which forms a cutting edge (31),
and having a drilling rig (40), by means of which the drilling tool (30) is fastened to the housing (10),
wherein after tapping a service pipe (50) for diverting (56) the medium from the tapped main pipe (15) is connectable to the drilling opening (12),
and wherein the ball element (20) on the one hand has a diametral hole (21) for passing the drilling tool (30) through and on the other hand by rotating about an axis of rotation (28) at right angles thereto is switchable between two rotary positions, namely an open position, which allows a medium flow (56) from the tapped main pipe (15) to the service pipe (50), and a closed position (20'), which shuts off the medium flow,
and the drilling tool (30) besides its rotary drive (57) also experiences an axial drilling feed (58) which displaces it between an extended position, in which the drilling tool is active and penetrates the ball element (20), and a retracted position, which allows the rotation of the ball element,
**characterized** in
that disposed between the piercing bush (32) and the shank (35) is a cylindrical portion (33) having a peripheral surface (34), which from the cutting edge (31) of the piercing bush (32) on is perfectly uniform and of which the frontmost part in extension direction is the cutting edge (31) of the piercing bush (32) and which during tapping is a drilling tool-side sealing means for medium impermeability,
that in a recessed part of the housing (10) an annular seal (25) is disposed, in extension direction, upstream of the ball element (20) and said upstream annular seal (25) forms the associated valve-side counterpart sealing means,
which over the entire range of displacement between the extended position and retracted position of the drilling tool (30) cooperates in a medium-tight manner with the peripheral surface (34) of the cylindrical portion (33),
and that the upstream annular seal (25) is disposed such a short distance in front of the ball element (20) that in the retracted position of the drilling tool (30) said upstream annular seal acts upon the piercing bush (32) of the cylindrical portion (33).

2. Valve according to claim 1, characterized in that the drilling rig (40) comprises a pot, of which the pot interior (44) in the fastening situation receives the pipe socket (11),
the pot edge (45) is fastened to the housing (10) and the pot base (41) carries the internal thread (43).

3. Valve according to claim 2, characterized in that, for fastening the drilling rig (40), the pot edge (45) is screw-connected (46, 52) to the housing (10).

4. Valve according to one of claims 1 to 3, characterized in that the drilling tool (30) is axially penetrated by a channel (54), which extends from the shank end (59) to the cutting edge (31),
and that the drilling tool (30) is simultaneously part of a pressure testing device (60, 61) and, in order to test whether the valve is fastened in a medium-tight manner to the main pipe (15), a test pressure (62) is applied to the channel (54).

5. Valve according to claim 4, characterized in that the axial channel (54) in the drilling tool (30) is used simultaneously to pass a rod (67) through and
that by means of the rod (67) the drilling core (63) is ejected (63', 68) from the interior (64) of the piercing bush (32).

6. Valve according to one of claims 1 to 5, characterized in that the valve is a combination of metal components and plastic components, wherein the plastic components rest against the outer surfaces of the housing (10) and the ball element (20) and its rotary operating device (26) are metal components.

## Revendications

1. Appareil de perçage et d'arrêt pour tuyaux (15) à fluide sous pression (16),
comportant une bille obturatrice (20) logée dans un carter (10) fixé contre le tuyau (15),
comportant un orifice de perçage (12) dans le carter (10) servant à introduire un outil de perçage (30) opérationnel contre le tuyau principal (15), lequel outil se compose d'une queue (35) entraînée en rotation (57) et d'une douille de taille (32), terminale et cylindrique , dont une arête forme un tranchant (31),
et comportant un châssis de perçage (40) permettant de fixer l'outil (30) contre le carter (10),
sachant qu'après le perçage l'orifice obtenu (12) permet de raccorder un tuyau (50) de piquage (56) du fluide présent dans le tuyau principal (15) ainsi percé,
et sachant que la bille (20) présente d'une part un trou diamétral (21) permettant le passage de l'outil de perçage (30) et d'autre part qu'elle est inversible par rotation selon un axe vertical (28) entre deux positions, à savoir entre une position ouverte autorisant l'écoulement du fluide (56)
depuis le tuyau principal préalablement percé (15) vers le tuyau de raccordement (50), et une position fermée (20') faisant barrage à l'écoulement du fluide,
et sachant que l'outil (30), outre son entraînement rotatif (57), décrit aussi un mouvement axial d'avance du perçage (58) qui le déplace entre une position
déployée et opérationnelle en perçage, lui faisant traverser la bille (20), et une position escamotée permettant à la bille de tourner.
**caractérisé en ce que**
entre la douille de taille (32) et la queue (35) se trouve un segment cylindrique (33) qui présente une surface circonférentielle (34) uniforme depuis le tranchant (31) de la douille de taille (32), surface dont la partie la plus en avant, dans le sens de sortie, est le tranchant de la douille de taille (32) et qui sert côté outil, pendant le perçage, de moyen d'étanchéité au fluide,
en ce que dans une partie intégrée du carter (10) se trouve un joint annulaire (25) situé en amont de la bille (20) dans le sens de sortie, et que ce joint d'étanchéité amont (25) forme le moyen de contre-étanchéité afférent côté appareil,
moyen qui dans toute la plage de réglage entre la position de sortie et la position d'escamotage de l'outil de perçage (30) interagit de façon étanche au fluide avec la surface circonférentielle (34) du segment cylindrique (33),
et caractérisé en ce que le joint annulaire en amont (25) est placée à un distance si faible de la bille (20) que, lorsque l'outil de perçage (30) se trouve en position escamotée, ce joint applique fermement contre la douille de taille (32) de la section cylindrique (33).

2. Appareil selon la revendication 1, caractérisé en ce que le châssis de perçage (40) se compose d'un pot dont l'intérieur (44), lors d'une fixation, reçoit l'embout de tuyau (11),
dont le bord de pot (45) est fixé contre le carter (10) et dont le fond du pot (41) comporte le taraudage (43).

3. Appareil selon la revendication 2, caractérisé en ce que, pour fixer le châssis de perçage (40), le bord du pot (45) est vissé (46, 52) avec le carter (10).

4. Appareil selon l'une des revendications 1 à 3, caractérisé en ce que l'outil de perçage (30) est traversé axialement par un conduit (54) s'étendant de l'extrémité de la queue (59) jusqu'au tranchant (31),
et en ce que l'outil de perçage (30) fait également partie intégrante d'un dispositif de contrôle de la pression (60, 61) et en ce qu'on applique une pression de contrôle (62) contre le conduit (54) pour vérifier si l'appareil est fixé de façon étanche aux fluides contre le tuyau principal (15).

5. Appareil selon la revendication 4, caractérisé en ce que le conduit axial (54) présent dans l'outil de perçage (30) sert en même temps à faire passer une tige (67)
et en ce que cette tige (67) sert à éjecter (63', 68) la carotte de perçage (63) venue se loger à l'intérieur (64) de la douille de taille (32).

6. Appareil selon l'une des revendications 1 à 5, caractérisé en ce que l'appareil est une combinaison d'organes métalliques et de composants en plastique, sachant que les composants en plastique appliquent contre les surfaces extérieures du carter (10) et que la bille (20) ainsi que son mécanisme d'actionnement rotatif (26) sont des organes métalliques.
